# EUROPEAN PATENT APPLICATION

(11) **EP 3 136 217 A1**
(43) Date of publication of application: **01.03.2017**
(21) Application number: 16157889.3
(22) Date of filing: 29.02.2016
(51) Int. Cl.: G06F 3/0488, G06Q 30/02, H04N 21/81

(54) **SYSTEMS AND METHODS FOR CONTENT PRESENTATION**

(30) Priority: 28.08.2015 US 201514839834; 31.08.2015 WO PCT/US2015/047766
(71) Applicant: Facebook, Inc., Menlo Park, CA 94025 (US)
(72) Inventor: VOSS, Brady John Brayley, Menlo Park, CA 94025 (US); PAKES, Matthew Hanson, Menlo Park, CA 94025 (US)
(74) Representative: Schröer, Gernot H.

(57) **Abstract**

Systems, methods, and non-transitory computer-readable media can provide a content feed having at least a first content item and a second content item through a display interface. The first content item can be associated with a threshold playback time. A determination can be made that the first content item is being played through the display interface. At least one touch screen gesture can be received through the display interface. A response to the touch screen gesture can be prevented until the first content item is played for the threshold playback time.

## Description

### FIELD OF THE INVENTION

The present technology relates to the field of content presentation. More particularly, the present technology relates to techniques for presenting content items through computing devices.

### BACKGROUND

Today, people often utilize computing devices (or systems) for a wide variety of purposes. Users can operate their computing devices to, for example, interact with one another, create content, share content, and access information. Under conventional approaches, content items (e.g., images, videos, audio files, etc.) can be made available through a content sharing platform. Users can operate their computing devices to access the content items through the platform. Typically, the content items can be provided, or uploaded, by various entities including, for example, content publishers and also users of the content sharing platform. In some instances, the content items can be categorized and/or curated.

In some instances, when accessing content items, users can be presented with advertising-related content. Depending on the implementation, advertising-related content can be presented before a content item is able to be accessed or played by a user (e.g., pre-roll advertisement), in between the content item being accessed or played (e.g., mid-roll advertisement), or after access or playback of the content item has ceased (e.g., end-roll advertisement). In some instances, users may be provided an option to bypass the presentation of such advertising-related content. For example, when available, the user operating the computing device can select a "skip" option to cease presentation of the advertising content and, consequently, begin accessing or playing content that is not advertising-related.

### SUMMARY

Various embodiments of the present disclosure can include systems, methods, and non-transitory computer readable media configured to provide a content feed having at least a first content item and a second content item through a display interface. The first content item can be associated with a threshold playback time. A determination can be made that the first content item is being played through the display interface. At least one touch screen gesture can be received through the display interface. A response to the touch screen gesture can be prevented until the first content item is played for the threshold playback time.

In an embodiment, upon receiving the touch screen gesture, at least one message is provided through the display interface, the message indicating that browsing of the content feed is disabled.

In an embodiment, upon receiving the touch screen gesture, at least one message is provided through the display interface, the message indicating an amount of time remaining until browsing of the content feed is enabled.

In an embodiment, the method further includes determining that the first content item has been played through the display interface for the threshold playback time, determining a second touch screen gesture through the display interface for browsing the content feed to the second content item, and playing the second content item through the display interface.

In an embodiment, the second content item is not associated with a corresponding threshold playback time and the method further includes determining a third touch screen gesture through the display interface for browsing the content feed to a third content item in the content feed, updating the display interface to advance the content feed to the third content item, wherein the advancing of the content feed is not prevented for any period of time.

In an embodiment, playback of the second content item is started automatically once the second content item is within a viewport region of the display interface.

In an embodiment, the touch screen gesture is at least one of a drag gesture, slide gesture, scroll gesture, swipe gesture, tap gesture, pinch gesture, spread gesture, rotate gesture, or a flick gesture.

In an embodiment, while the first content item is playing, at least a portion of the second content item is visible through the display interface.

In an embodiment, a region of the content feed corresponding to the portion of the second content item is displayed using a reduced brightness level.

In an embodiment, the method further includes determining a revenue amount that satisfies a cost of acquiring one or more content items in the content feed and determining the threshold playback time based at least in part on the revenue amount.

In an embodiment, one or more computer-readable non-transitory storage media embody software that is operable when executed to perform a method according to the invention or any of the above mentioned embodiments.

In an embodiment, a system comprises: one or more processors; and at least one memory coupled to the processors and comprising instructions executable by the processors, the processors operable when executing the instructions to perform a method according to the invention or any of the above mentioned embodiments.

In an embodiment, a computer program product, preferably comprising a computer-readable non-transitory storage media, is operable when executed on a data processing system to perform a method according to the invention or any of the above mentioned embodiments.

It should be appreciated that many other features, applications, embodiments, and/or variations of the disclosed technology will be apparent from the accompanying drawings and from the following detailed description. Additional and/or alternative implementations of the structures, systems, non-transitory computer readable media, and methods described herein can be employed without departing from the principles of the disclosed technology.

Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

- **FIGURE 1**: illustrates an example system including an example content provider module configured to provide content to users, according to an embodiment of the present disclosure.
- **FIGURE 2**: illustrates an example of an interface module configured to provide an interface for accessing content items, according to an embodiment of the present disclosure.
- **FIGURE 3**: illustrates an example of an interface through which content items are presented in a content feed, according to an embodiment of the present disclosure.
- **FIGURE 4**: illustrates an example of the interface through which an advertising-related content item is being presented in a content feed, according to an embodiment of the present disclosure.
- **FIGURES 5A-B**: illustrate other examples of the interface through which an advertising-related content item is being presented in a content feed, according to an embodiment of the present disclosure.
- **FIGURE 6**: illustrates an example method for disabling gestures while accessing content through an interface, according to an embodiment of the present disclosure.
- **FIGURE 7**: illustrates a network diagram of an example system including an example social networking system that can be utilized in various scenarios, according to an embodiment of the present disclosure.
- **FIGURE 8**: illustrates an example of a computer system or computing device that can be utilized in various scenarios, according to an embodiment of the present disclosure.

The figures depict various embodiments of the disclosed technology for purposes of illustration only, wherein the figures use like reference numerals to identify like elements. One skilled in the art will readily recognize from the following discussion that alternative embodiments of the structures and methods illustrated in the figures can be employed without departing from the principles of the disclosed technology described herein.

### DETAILED DESCRIPTION

### APPROACHES FOR CONTENT PRESENTATION

People use computing devices (or systems) for a wide variety of purposes. As mentioned, under conventional approaches, a user can utilize a computing device to share content items (e.g., documents, images, videos, audio, etc.) with other users. Under conventional approaches, content items (e.g., images, videos, audio files, etc.) can be made available through a content sharing platform. Users can operate their computing devices to access the content items through the platform. Typically, the content items can be provided, or uploaded, by various entities including, for example, content publishers and also users of the content sharing platform.

In some instances, when accessing content items, users can be presented with advertising-related content. Depending on the implementation, advertising-related content can be presented before a content item is able to be accessed or played by a user (e.g., pre-roll advertisement), in between the content item being accessed or played (e.g., mid-roll advertisement), or after access or playback of the content item has ceased (e.g., end-roll advertisement). In some instances, users may be provided an option to bypass the presentation of such advertising-related content. For example, when available, the user operating the computing device can select a "skip" option to cease presentation of the advertising content and, consequently, begin accessing or playing content that is not advertising-related. Such approaches, however, prevent users from accessing the desired or selected content items in an obtrusive manner since the user is either completely unable to access the desired or selected content item until presentation of the advertising-related content has elapsed for a threshold playback time or until the user has taken action to select an option (e.g., "skip" button) to skip the advertising-related content.

An improved approach overcomes the foregoing and other disadvantages associated with conventional approaches. In various embodiments, a user operating a computing device can interact with a content provider interface to access various content items (e.g., images, videos, audio files, etc.). The content items can be presented through the interface as part of a content feed. Users can navigate (e.g., browse) the content feed, for example, by scrolling or performing some gesture through a display screen of the computing device, to access the different content items that are available in the content feed. In some embodiments, the user can navigate content feeds by performing a scroll gesture to move up or down the content feed. There may be any number of content feeds (e.g., "channels") and these content feeds may include any number of content items that have been categorized and/or correspond to a particular category (e.g., sports, entertainment, music videos, etc.). In some embodiments, content items (e.g., animated images, videos, audio files, etc.) in a content feed can begin playing as soon as a content item is positioned within a viewport region of the interface. The viewport region may be defined by a specified set of pixel coordinates that correspond to the display screen of the computing device through which the interface is being accessed.

In various embodiments, advertising-related content items may be inserted in the content feed between the different content items included in the feed. An advertising-related content item can automatically begin playing through the interface when the advertising-related content item is positioned within the viewport region of the interface, for example, as a result of the user scrolling to the advertising-related content item. The advertising-related content item can be played for a threshold playback time (e.g., 5, 6, 7, or 8 seconds). In some embodiments, while the advertising-related content item is being played, the user is prevented from navigating the content feed. When preventing the user from navigating the content feed, in some embodiments, any gestures (e.g., scrolling gesture) made by the user through the display screen of the computing device can be ignored and the advertising-related content item continues playing until the threshold playback time is reached. In some embodiments, when preventing the user from navigating the content feed, any default, or standard, responses to the gestures made by the user are prevented. Other variations are possible. For example, when preventing the user from navigating the content feed, a different response (e.g., an elastic or "rubber band" effect) can be produced instead of any default, or standard, responses to the gestures made by the user. In some embodiments, when preventing the user from navigating the content feed, any default, or standard, responses to the gestures made by the user can be performed at a threshold (e.g., slower) response rate or after a threshold delay period. In some embodiments, when the user attempts to navigate the content feed while an advertising-related content item is playing, a message can be displayed indicating an amount of time remaining in the threshold playback time for which the advertising-related content item is to be played. Once the threshold playback time has elapsed, in some embodiments, the interface can automatically be updated to play the next content item in the content feed. Although the examples used in this disclosure specifically reference advertising-related content items, the approaches described herein may be applied to any type of content item. In other words, any content item can be associated with a threshold playback time and user gestures can be disabled until the content item is played for the threshold playback time.

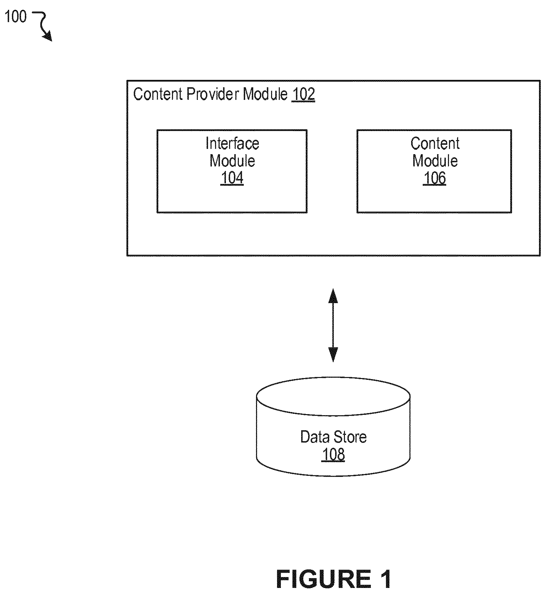

**FIGURE 1** illustrates an example system 100 including an example content provider module 102 configured to provide content items to users, according to an embodiment of the present disclosure. As shown in the example of **FIGURE 1****,** the content provider module 102 can include an interface module 104 and a content module 106. In some instances, the example system 100 can include at least one data store 108. The components (e.g., modules, elements, etc.) shown in this figure and all figures herein are exemplary only, and other implementations may include additional, fewer, integrated, or different components. Some components may not be shown so as not to obscure relevant details.

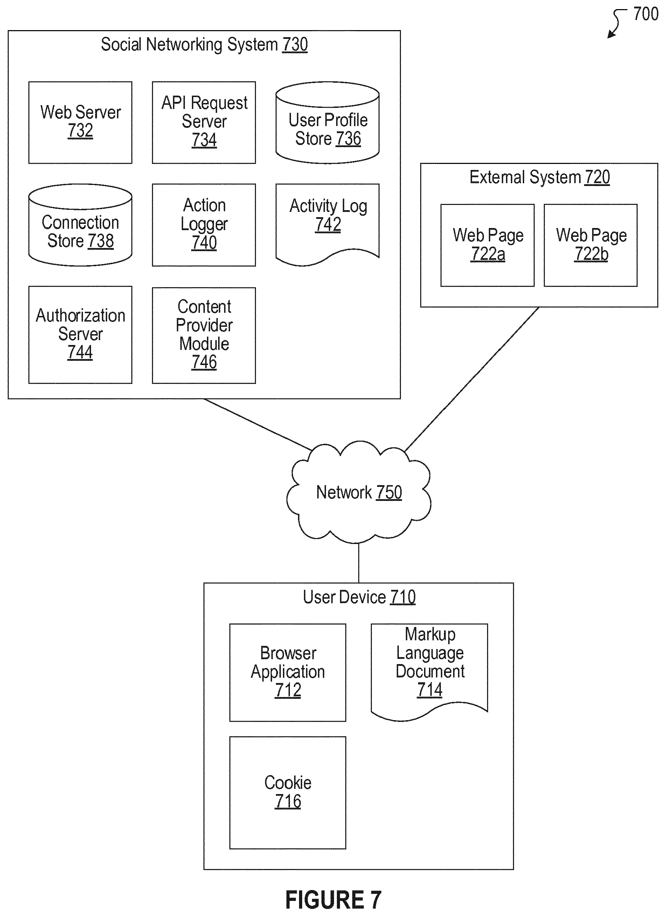

In some embodiments, the content provider module 102 can be implemented, in part or in whole, as software, hardware, or any combination thereof. In general, a module, as discussed herein, can be associated with software, hardware, or any combination thereof. In some implementations, one or more functions, tasks, and/or operations of modules can be carried out or performed by software routines, software processes, hardware, and/or any combination thereof. In some cases, the content provider module 102 can be implemented, in part or in whole, as software running on one or more computing devices or systems, such as on a user computing device or client computing system. For example, the content provider module 102, or at least a portion thereof, can be implemented as or within an application (e.g., app), a program, or an applet, etc., running on a user computing device or a client computing system, such as the user device 710 of **FIGURE 7****.** Further, the content provider module 102, or at least a portion thereof, can be implemented using one or more computing devices or systems that include one or more servers, such as network servers or cloud servers. In some instances, the content provider module 102 can, in part or in whole, be implemented within or configured to operate in conjunction with a social networking system (or service), such as the social networking system 730 of FIGURE 7. It should be understood that there can be many variations or other possibilities.

In various embodiments, the content provider module 102 can utilize the interface module 104 and the content module 106 to provide content items to users. The interface module 104 can be configured to provide an interface (e.g., graphical user interface) through which content items can be presented and accessed. For example, the interface can be provided through a software application running on a computing device being operated by a user. The user can interact with the interface, for example, by performing touch screen gestures through a display screen of the computing device.

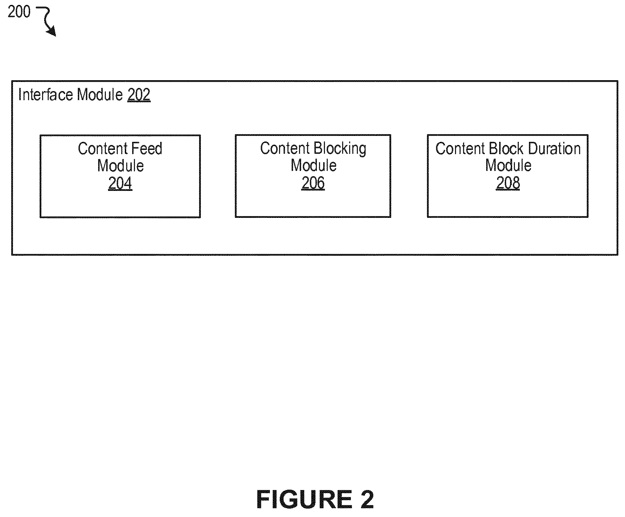

As mentioned, in some embodiments, content items can be presented through the interface as part of a content feed, which the user can navigate to access or play content items. For example, a content item can automatically begin playing when the content item is located within a viewport region of the interface. In some instances, advertising-related content items may be inserted in the content feed between the different content items included in the content feed. Similarly, when an advertising-related content item is positioned within the viewport region of the interface, for example, as a result of the user scrolling to the advertising-related content item, the advertising-related content item can automatically begin playing through the interface. The advertising-related content item can be played for a threshold playback time (e.g., 5, 6, 7, or 8 seconds). In some embodiments, while the advertising-related content item is being played, the user is prevented from navigating the content feed until the threshold playback time has elapsed. More details regarding the interface module 104 will be provided below in reference to **FIGURE 2****.**

The content module 106 can be configured to provide various types of content items that can be presented to users through the interface provided by the interface module 104. The content items provided by the content module 106 may be categorized into one or more categories and/or be associated with one or more content feeds (e.g., channels). Further, each content feed may be associated with a particular topic, theme, and/or entity (e.g., content publisher), to name some examples. Users can access and/or subscribe to one or more different content feeds to access the different content items that are included in the respective content feeds.

In some embodiments, users can access respective content feeds that are customized for the user. For example, the content module 106 can train (and retrain) machine learning models for ranking content items for potential presentation in content feeds of users of a social networking system. For example, the content module 106 can divide its users into different sets based on various attributes of the users (e.g., age, interests, language, etc.) and can generate one or more models for each set of users. Users with different attributes may have different behavioral patterns that can reflect their interests in different topics reflected by content items. As a result, different models for ranking content items for different sets of users can provide more accurate ranking of content items and provide higher likelihood that users will be interested in the content items presented to them. In some embodiments, the features used to train the models can include interactions of users with content items of a content feed. Such interactions can include, for example, selecting a link in the content item, commenting on the content item, endorsing or "liking" the content item, sharing the content item with other entities (e.g., other users of the social networking system, social connections or "friends", etc.), and hiding the content item. The content module 106 can use the models for each set of users to determine levels of interest of a user in content items. The level of interest of a user in each topic can be indicated by a topic score. The social networking system can rank a content item for potential presentation to a user based on a topic(s) reflected by the content item and the topic score(s) of the user for the topic(s). Content items having a ranking that satisfies a selected threshold value can be presented to the user in her customized content feed.

In some embodiments, the content provider module 102 can be configured to communicate and/or operate with the at least one data store 108 in the example system 100. The at least one data store 108 can be configured to store and maintain various types of data. In various embodiments, the at least one data store 108 can store data relevant to function and operation of the content provider module 102. One example of such data is content items that are available for access through the interface provided by the interface module 104. In some implementations, the at least one data store 108 can store information associated with the social networking system (e.g., the social networking system 730 of FIGURE 7). The information associated with the social networking system can include data about users, social connections, social interactions, locations, geo-fenced areas, maps, places, events, pages, groups, posts, communications, content, feeds, account settings, privacy settings, a social graph, and various other types of data. In some implementations, the at least one data store 108 can store information associated with users, such as user identifiers, user information, profile information, user specified settings, content produced or posted by users, and various other types of user data. It should be appreciated that there can be many variations or other possibilities.

**FIGURE 2** illustrates an example 200 of an interface module 202 configured to provide an interface for accessing content items, according to an embodiment of the present disclosure. In some embodiments, the interface module 104 of FIGURE 1 can be implemented with the interface module 202. As shown in the example of FIGURE 2, the interface module 202 can include a content feed module 204, a content blocking module 206, and a content block duration module 208.

As mentioned, the interface module 202 can be configured to provide an interface (e.g., graphical user interface) through which content items (e.g., images, videos, audio files, etc.) can be presented and accessed. In various embodiments, the interface module 202 can utilize a content feed module 204 that is configured to organize and present the content items in one or more content feeds.

In some implementations, a user can browse the different content items included in a content feed, for example, by performing a scroll gesture to move the content feed up or down. Naturally, the interface can be configured differently to allow for other types of gestures to be utilized for navigating the content feeds. For example, in some implementations, the user can browse content items in a content feed by performing a swipe gesture to move to the left or right of the content feed. Other example gestures include drag gestures, slide gestures, tap gestures, pinch gestures, spread gestures, rotate gestures, and flick gestures.

In some embodiments, the content feed module 204 can be configured to automatically play content items (e.g., animated images, videos, audio files, etc.) in a content feed as soon as the content item is positioned within a viewport region of the interface. The viewport region may correspond to a pre-determined region of the interface and/or the display screen of the computing device on which the content feed is being accessed. For example, the viewport region may be defined by a specified set of pixel coordinates that correspond to the display screen of the computing device through which the interface is being accessed. Depending on the implementation, the pre-determined region may generally correspond to the top, middle, or bottom of the display screen. In some implementations, the pre-determined region may vary depending on the make, model, and/or type of computing device being used to access the interface.

As mentioned, advertising-related content items may be inserted in a content feed in between the different content items included in the content feed. Similar to content items, in some embodiments, the content feed module 204 can be configured to automatically play advertising-related content items (e.g., animated images, videos, audio files, etc.) included in the content feed when the advertising-related content item is positioned within the viewport region of the interface. The user can learn additional information relating to an advertising-related content item being played by selecting the content item, for example, by performing a tap gesture.

Depending on the implementation, the advertising-related content item can be played for a threshold playback time (e.g., 5 seconds, 6 seconds, 7 seconds, 8 seconds, one minute, etc.) of any suitable duration. In some embodiments, when an advertising-related content item is being played, the content blocking module 206 can be configured to prevent the user from further navigating the content feed until the threshold playback time has elapsed. Thus, for example, any gestures (e.g., scrolling gestures, swiping gestures, etc.) made by the user through the display screen of the computing device are not processed and the advertising-related content item continues playing until the threshold playback time has elapsed. In other instances, such gestures made by the user can be processed insofar as presentation of the advertising-related content item remains within a desired viewport region corresponding to a pre-determined region of the interface and/or the display screen of a computing device such that the advertising-related content item may move but not disappear from view.

In some embodiments, when the user attempts to navigate the content feed while an advertising-related content item is playing, the content blocking module 206 can display a message indicating that an advertising-related content item is being played. The message may include additional information including, for example, an indication of the amount of time remaining in the threshold playback time for which the advertising-related content item is to be played. Once the threshold playback time has elapsed, in some embodiments, the interface can automatically be updated to advance to the next content item in the content feed and can automatically begin playing the content item once it is located within the viewport region of the interface. The examples used herein specifically make reference to advertising-related content items, however, as mentioned, the approaches described may be applied to any type of content item. For example, the content blocking module 206 can be configured to prevent the user from navigating a content feed while a content item from a particular content publisher is being played. In some embodiments, an entity (e.g., a user of the social networking system or advertiser) can specify a preference to instead present advertising-related content before a content item is able to be accessed or played by a user (e.g., pre-roll advertisement), in between the content item being accessed or played (e.g., mid-roll advertisement), or after access or playback of the content item has ceased (e.g., end-roll advertisement in lieu of the approaches described herein in which the user is prevented from navigating the content feed.

As mentioned, the content blocking module 206 can be configured to prevent the user from navigating (or limit the user in navigating) the content feed when an advertising-related content item is being played until a threshold playback time has elapsed. In various embodiments, the content block duration module 208 can be configured to vary the threshold playback time for which any given content item is to be played based on one or more factors. By varying the threshold playback time for which any content item is to be played, the content block duration module 208 can therefore set the amount of time that the content blocking module 206 will prevent the user from further navigating the content feed while the content item is being played.

In some instances, the content blocking duration module 208 can be configured to set a threshold playback time for content items, for example, to generate a revenue amount that satisfies any costs of acquiring the content items being accessed and/or presented. For example, a higher revenue amount may be generated by setting a longer threshold playback time for advertising-related content items. The revenue amount may be measured in various ways including, for example, cost per mille (CPM), cost per impression, and/or cost per click, to name some examples. In one example, a content publisher that publishes content items in a content feed may specify that any advertising-related content items that are presented in the content feed should satisfy a CPM amount of $30. In this example, the threshold playback times for advertising-related content items that are included in the content feed can be adjusted to satisfy the $30 CPM amount.

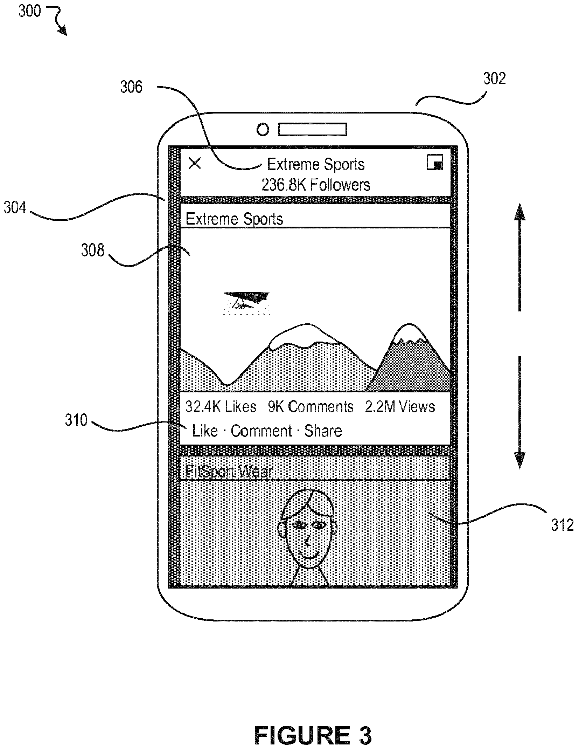

**FIGURE 3** illustrates an example 300 of an interface 304 through which content items 308, 312 are presented in a content feed 306 (e.g., a content feed associated with the "Extreme Sports" topic), according to an embodiment of the present disclosure. In this example, the interface 304 is presented on a display screen of the computing device 302. Further, the interface 304 may be provided through an application (e.g., a web browser, a social networking application, etc.) running on the computing device 302. The user operating the computing device 302 can scroll through the content feed 306, for example, by performing up or down scroll gesture. In the example of **FIGURE 3****,** the content item (e.g., video) 308 is shown as being located in the viewport region of the interface 304 and, as a result, the content item 308 is being played. In some embodiments, while a content item is playing, the regions of the content feed 306 corresponding to the other content items that are visible in the content feed 306 are shown as being dimmed or having a reduced brightness level. For example, if the visible content item is an image, then a portion of the content item itself may be visible in the content feed. If the visible content item is an animated image or video, then a portion of a frame corresponding to the animated image or video may be visible in the content feed. Thus, in **FIGURE 3****,** while the content item 308 is playing, the content item 312 is shown with as being dimmed or having a reduced brightness level. In some embodiments, the user can interact 310 with the content item 308 being played, for example, by selecting a link in the content item, providing a comment on the content item, endorsing or "liking" the content item, sharing the content item with other entities (e.g., other users of the social networking system, social connections or "friends", etc.), to name some examples.

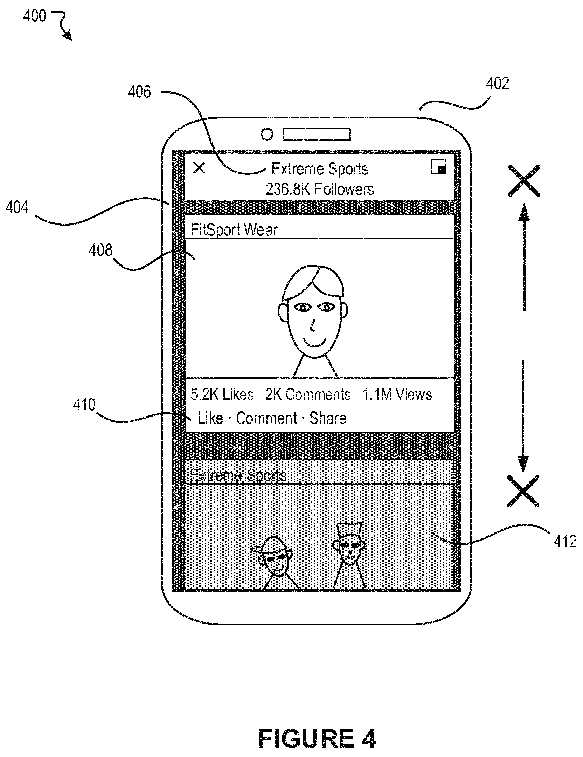

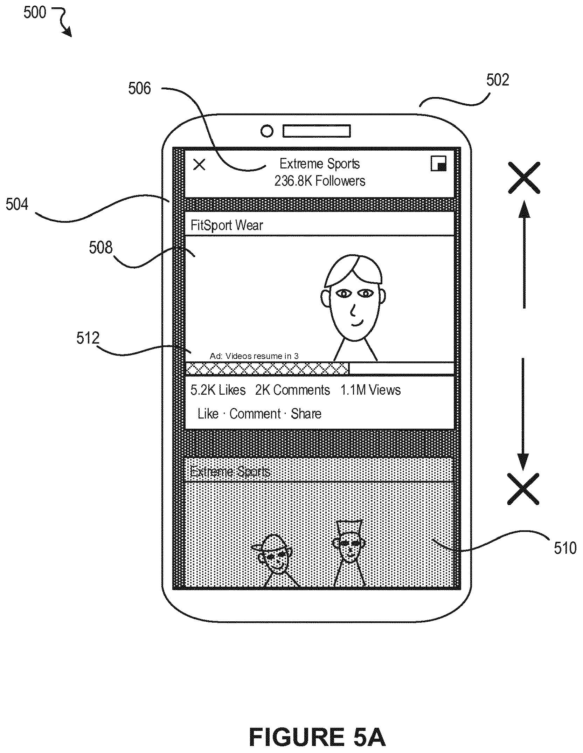

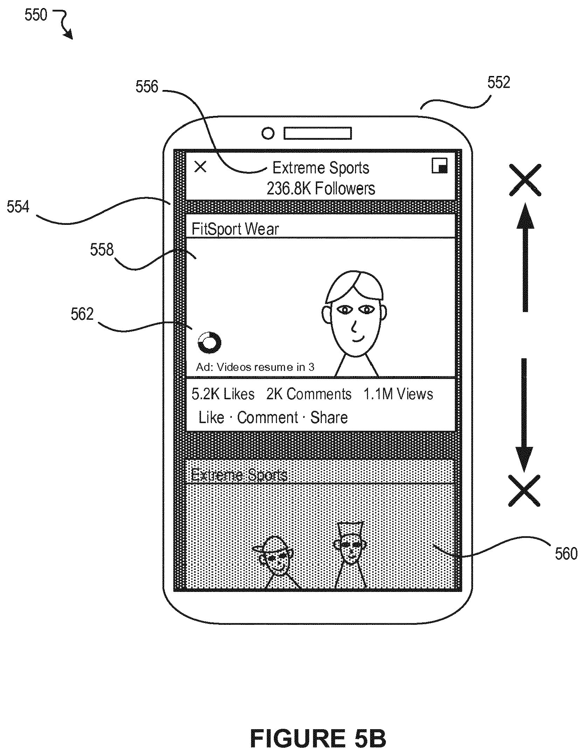

**FIGURE 4** illustrates an example 400 of the interface 404 through which an advertising-related content item 408 is being presented in a content feed 406, according to an embodiment of the present disclosure. In this example, the interface 404 is presented on a display screen of the computing device 402. Further, the interface 404 may be provided through an application (e.g., a web browser, a social networking application, etc.) running on the computing device 402. In the example of **FIGURE 4****,** the content item (e.g., video) 408 is an advertising-related content item that is shown as being located in the viewport region of the interface 404. As mentioned, advertising-related content items can automatically be played when located within the viewport region of the interface. In some embodiments, while the advertising-related content item 408 is playing, the user operating the computing device 402 is prevented from (or limited in) browsing or navigating the content feed 406. In other words, any gestures performed by the user, for example, through the display screen of the computing device 402 will not cause the content feed 406 to advance to the next content item 412 until a threshold playback time associated with the advertising-related content item 408 has elapsed. In some embodiments, when the user performs a gesture, for example, in an attempt to advance the advertising-related content item 408 to the next content item 412, a message indicating that advertising content is being played can be presented to the user, as illustrated in the examples of **FIGURES 5A** and **5B****.**

**FIGURE 5A** illustrates another example of the interface 504 through which an advertising-related content item 508 is being presented in a content feed 506, according to an embodiment of the present disclosure. In this example, the interface 504 is presented on a display screen of the computing device 502. As described in reference to **FIGURE 4****,** the content item (e.g., video) 508 is an advertising-related content item that is playing in the viewport region of the interface 504. Further, while the advertising-related content item 508 is playing, the user operating the computing device 502 is prevented from browsing or navigating the content feed 506. In some embodiments, when the user attempts to advance or stop playback of the advertising-related content item 508, for example, by performing a gesture, a message 512 indicating that advertising content is being played can be presented to the user. The message 512 can indicate that an advertisement is currently being presented and can also indicate an amount of time remaining until playback of the advertisement has completed or until the user can once again continue browsing or navigating the content feed 506, for example, to view the next content item 510 in the content feed 506 or any content item in the content feed 506 that precedes the content item 508.

**FIGURE 5B** illustrates another example of the interface 554 through which an advertising-related content item 558 is being presented in a content feed 556, according to an embodiment of the present disclosure. In this example, the interface 554 is presented on a display screen of the computing device 552. As described in reference to **FIGURE 4****,** the content item (e.g., video) 558 is an advertising-related content item that is playing in the viewport region of the interface 554. Further, while the advertising-related content item 558 is playing, the user operating the computing device 552 is prevented from browsing or navigating the content feed 556. In some embodiments, when the user attempts to advance or stop playback of the advertising-related content item 558, for example, by performing a gesture, a message 562 indicating that advertising content is being played can be presented to the user. The message 562 can indicate that an advertisement is currently being presented and can also indicate an amount of time remaining until playback of the advertisement has completed or until the user can once again continue browsing or navigating the content feed 556, for example, to view the next content item 560 in the content feed 556 or any content item in the content feed 556 that precedes the content item 558. In some embodiments, the message 562 includes a circular countdown timer that graphically indicates the remaining amount of time.

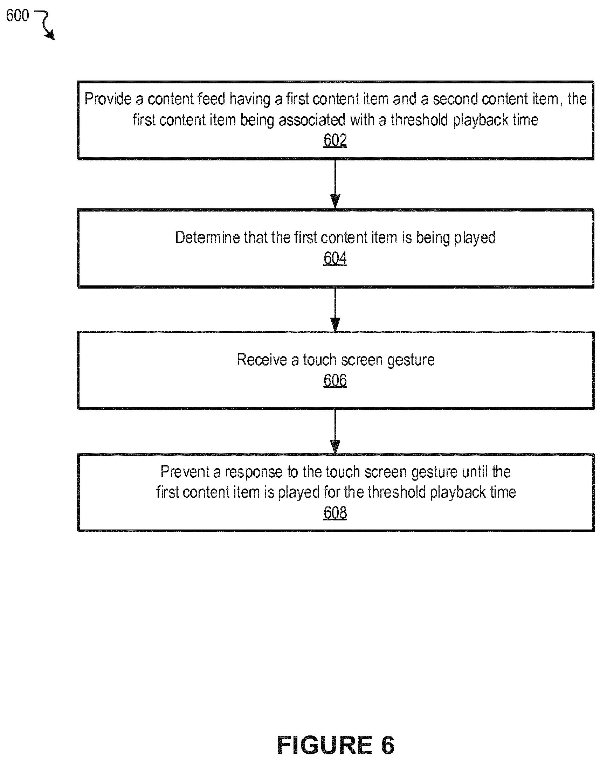

**FIGURE 6** illustrates an example method for determining software applications for sharing content items, according to an embodiment of the present disclosure. It should be appreciated that there can be additional, fewer, or alternative steps performed in similar or alternative orders, or in parallel, within the scope of the various embodiments discussed herein unless otherwise stated. At block 602, the example method 600 can provide a content feed having at least a first content item and a second content item through a display interface. The first content item can be associated with a threshold playback time. At block 604, a determination can be made that the first content item is being played through the display interface. At block 606, at least one touch screen gesture can be received through the display interface. At block 608, a response to the touch screen gesture can be prevented until the first content item is played for the threshold playback time.

It is contemplated that there can be many other uses, applications, and/or variations associated with the various embodiments of the present disclosure. For example, in some cases, user can choose whether or not to opt-in to utilize the disclosed technology. The disclosed technology can also ensure that various privacy settings and preferences are maintained and can prevent private information from being divulged. In another example, various embodiments of the present disclosure can learn, improve, and/or be refined over time.

### SOCIAL NETWORKING SYSTEM - EXAMPLE IMPLEMENTATION

**FIGURE 7** illustrates a network diagram of an example system 700 that can be utilized in various scenarios, in accordance with an embodiment of the present disclosure. The system 700 includes one or more user devices 710, one or more external systems 720, a social networking system (or service) 730, and a network 750. In an embodiment, the social networking service, provider, and/or system discussed in connection with the embodiments described above may be implemented as the social networking system 730. For purposes of illustration, the embodiment of the system 700, shown by **FIGURE 7****,** includes a single external system 720 and a single user device 710. However, in other embodiments, the system 700 may include more user devices 710 and/or more external systems 720. In certain embodiments, the social networking system 730 is operated by a social network provider, whereas the external systems 720 are separate from the social networking system 730 in that they may be operated by different entities. In various embodiments, however, the social networking system 730 and the external systems 720 operate in conjunction to provide social networking services to users (or members) of the social networking system 730. In this sense, the social networking system 730 provides a platform or backbone, which other systems, such as external systems 720, may use to provide social networking services and functionalities to users across the Internet.

The user device 710 comprises one or more computing devices (or systems) that can receive input from a user and transmit and receive data via the network 750. In one embodiment, the user device 710 is a conventional computer system executing, for example, a Microsoft Windows compatible operating system (OS), Apple OS X, and/or a Linux distribution. In another embodiment, the user device 710 can be a computing device or a device having computer functionality, such as a smart-phone, a tablet, a personal digital assistant (PDA), a mobile telephone, a laptop computer, a wearable device (e.g., a pair of glasses, a watch, a bracelet, etc.), a camera, an appliance, etc. The user device 710 is configured to communicate via the network 750. The user device 710 can execute an application, for example, a browser application that allows a user of the user device 710 to interact with the social networking system 730. In another embodiment, the user device 710 interacts with the social networking system 730 through an application programming interface (API) provided by the native operating system of the user device 710, such as iOS and ANDROID. The user device 710 is configured to communicate with the external system 720 and the social networking system 730 via the network 750, which may comprise any combination of local area and/or wide area networks, using wired and/or wireless communication systems.

In one embodiment, the network 750 uses standard communications technologies and protocols. Thus, the network 750 can include links using technologies such as Ethernet, 802.11, worldwide interoperability for microwave access (WiMAX), 3G, 4G, CDMA, GSM, LTE, digital subscriber line (DSL), etc. Similarly, the networking protocols used on the network 750 can include multiprotocol label switching (MPLS), transmission control protocol/Internet protocol (TCP/IP), User Datagram Protocol (UDP), hypertext transport protocol (HTTP), simple mail transfer protocol (SMTP), file transfer protocol (FTP), and the like. The data exchanged over the network 750 can be represented using technologies and/or formats including hypertext markup language (HTML) and extensible markup language (XML). In addition, all or some links can be encrypted using conventional encryption technologies such as secure sockets layer (SSL), transport layer security (TLS), and Internet Protocol security (IPsec).

In one embodiment, the user device 710 may display content from the external system 720 and/or from the social networking system 730 by processing a markup language document 714 received from the external system 720 and from the social networking system 730 using a browser application 712. The markup language document 714 identifies content and one or more instructions describing formatting or presentation of the content. By executing the instructions included in the markup language document 714, the browser application 712 displays the identified content using the format or presentation described by the markup language document 714. For example, the markup language document 714 includes instructions for generating and displaying a web page having multiple frames that include text and/or image data retrieved from the external system 720 and the social networking system 730. In various embodiments, the markup language document 714 comprises a data file including extensible markup language (XML) data, extensible hypertext markup language (XHTML) data, or other markup language data. Additionally, the markup language document 714 may include JavaScript Object Notation (JSON) data, JSON with padding (JSONP), and JavaScript data to facilitate data-interchange between the external system 720 and the user device 710. The browser application 712 on the user device 710 may use a JavaScript compiler to decode the markup language document 714.

The markup language document 714 may also include, or link to, applications or application frameworks such as FLASH™ or Unity™ applications, the Silver-light™ application framework, etc.

In one embodiment, the user device 710 also includes one or more cookies 716 including data indicating whether a user of the user device 710 is logged into the social networking system 730, which may enable modification of the data communicated from the social networking system 730 to the user device 710.

The external system 720 includes one or more web servers that include one or more web pages 722a, 722b, which are communicated to the user device 710 using the network 750. The external system 720 is separate from the social networking system 730. For example, the external system 720 is associated with a first domain, while the social networking system 730 is associated with a separate social networking domain. Web pages 722a, 722b, included in the external system 720, comprise markup language documents 714 identifying content and including instructions specifying formatting or presentation of the identified content. As discussed previously, it should be appreciated that there can be many variations or other possibilities.

The social networking system 730 includes one or more computing devices for a social network, including a plurality of users, and providing users of the social network with the ability to communicate and interact with other users of the social network. In some instances, the social network can be represented by a graph, i.e., a data structure including edges and nodes. Other data structures can also be used to represent the social network, including but not limited to databases, objects, classes, meta elements, files, or any other data structure. The social networking system 730 may be administered, managed, or controlled by an operator. The operator of the social networking system 730 may be a human being, an automated application, or a series of applications for managing content, regulating policies, and collecting usage metrics within the social networking system 730. Any type of operator may be used.

Users may join the social networking system 730 and then add connections to any number of other users of the social networking system 730 to whom they desire to be connected. As used herein, the term "friend" refers to any other user of the social networking system 730 to whom a user has formed a connection, association, or relationship via the social networking system 730. For example, in an embodiment, if users in the social networking system 730 are represented as nodes in the social graph, the term "friend" can refer to an edge formed between and directly connecting two user nodes.

Connections may be added explicitly by a user or may be automatically created by the social networking system 730 based on common characteristics of the users (e.g., users who are alumni of the same educational institution). For example, a first user specifically selects a particular other user to be a friend. Connections in the social networking system 730 are usually in both directions, but need not be, so the terms "user" and "friend" depend on the frame of reference. Connections between users of the social networking system 730 are usually bilateral ("two-way"), or "mutual," but connections may also be unilateral, or "one-way." For example, if Bob and Joe are both users of the social networking system 730 and connected to each other, Bob and Joe are each other's connections. If, on the other hand, Bob wishes to connect to Joe to view data communicated to the social networking system 730 by Joe, but Joe does not wish to form a mutual connection, a unilateral connection may be established. The connection between users may be a direct connection; however, some embodiments of the social networking system 730 allow the connection to be indirect via one or more levels of connections or degrees of separation.

In addition to establishing and maintaining connections between users and allowing interactions between users, the social networking system 730 provides users with the ability to take actions on various types of items supported by the social networking system 730. These items may include groups or networks (i.e., social networks of people, entities, and concepts) to which users of the social networking system 730 may belong, events or calendar entries in which a user might be interested, computer-based applications that a user may use via the social networking system 730, transactions that allow users to buy or sell items via services provided by or through the social networking system 730, and interactions with advertisements that a user may perform on or off the social networking system 730. These are just a few examples of the items upon which a user may act on the social networking system 730, and many others are possible. A user may interact with anything that is capable of being represented in the social networking system 730 or in the external system 720, separate from the social networking system 730, or coupled to the social networking system 730 via the network 750.

The social networking system 730 is also capable of linking a variety of entities. For example, the social networking system 730 enables users to interact with each other as well as external systems 720 or other entities through an API, a web service, or other communication channels. The social networking system 730 generates and maintains the "social graph" comprising a plurality of nodes interconnected by a plurality of edges. Each node in the social graph may represent an entity that can act on another node and/or that can be acted on by another node. The social graph may include various types of nodes. Examples of types of nodes include users, non-person entities, content items, web pages, groups, activities, messages, concepts, and any other things that can be represented by an object in the social networking system 730. An edge between two nodes in the social graph may represent a particular kind of connection, or association, between the two nodes, which may result from node relationships or from an action that was performed by one of the nodes on the other node. In some cases, the edges between nodes can be weighted. The weight of an edge can represent an attribute associated with the edge, such as a strength of the connection or association between nodes. Different types of edges can be provided with different weights. For example, an edge created when one user "likes" another user may be given one weight, while an edge created when a user befriends another user may be given a different weight.

As an example, when a first user identifies a second user as a friend, an edge in the social graph is generated connecting a node representing the first user and a second node representing the second user. As various nodes relate or interact with each other, the social networking system 730 modifies edges connecting the various nodes to reflect the relationships and interactions.

The social networking system 730 also includes user-generated content, which enhances a user's interactions with the social networking system 730. User-generated content may include anything a user can add, upload, send, or "post" to the social networking system 730. For example, a user communicates posts to the social networking system 730 from a user device 710. Posts may include data such as status updates or other textual data, location information, images such as photos, videos, links, music or other similar data and/or media. Content may also be added to the social networking system 730 by a third party. Content "items" are represented as objects in the social networking system 730. In this way, users of the social networking system 730 are encouraged to communicate with each other by posting text and content items of various types of media through various communication channels. Such communication increases the interaction of users with each other and increases the frequency with which users interact with the social networking system 730.

The social networking system 730 includes a web server 732, an API request server 734, a user profile store 736, a connection store 738, an action logger 740, an activity log 742, and an authorization server 744. In an embodiment of the invention, the social networking system 730 may include additional, fewer, or different components for various applications. Other components, such as network interfaces, security mechanisms, load balancers, failover servers, management and network operations consoles, and the like are not shown so as to not obscure the details of the system.

The user profile store 736 maintains information about user accounts, including biographic, demographic, and other types of descriptive information, such as work experience, educational history, hobbies or preferences, location, and the like that has been declared by users or inferred by the social networking system 730. This information is stored in the user profile store 736 such that each user is uniquely identified. The social networking system 730 also stores data describing one or more connections between different users in the connection store 738. The connection information may indicate users who have similar or common work experience, group memberships, hobbies, or educational history. Additionally, the social networking system 730 includes user-defined connections between different users, allowing users to specify their relationships with other users. For example, user-defined connections allow users to generate relationships with other users that parallel the users' real-life relationships, such as friends, co-workers, partners, and so forth. Users may select from predefined types of connections, or define their own connection types as needed. Connections with other nodes in the social networking system 730, such as non-person entities, buckets, cluster centers, images, interests, pages, external systems, concepts, and the like are also stored in the connection store 738.

The social networking system 730 maintains data about objects with which a user may interact. To maintain this data, the user profile store 736 and the connection store 738 store instances of the corresponding type of objects maintained by the social networking system 730. Each object type has information fields that are suitable for storing information appropriate to the type of object. For example, the user profile store 736 contains data structures with fields suitable for describing a user's account and information related to a user's account. When a new object of a particular type is created, the social networking system 730 initializes a new data structure of the corresponding type, assigns a unique object identifier to it, and begins to add data to the object as needed. This might occur, for example, when a user becomes a user of the social networking system 730, the social networking system 730 generates a new instance of a user profile in the user profile store 736, assigns a unique identifier to the user account, and begins to populate the fields of the user account with information provided by the user.

The connection store 738 includes data structures suitable for describing a user's connections to other users, connections to external systems 720 or connections to other entities. The connection store 738 may also associate a connection type with a user's connections, which may be used in conjunction with the user's privacy setting to regulate access to information about the user. In an embodiment of the invention, the user profile store 736 and the connection store 738 may be implemented as a federated database.

Data stored in the connection store 738, the user profile store 736, and the activity log 742 enables the social networking system 730 to generate the social graph that uses nodes to identify various objects and edges connecting nodes to identify relationships between different objects. For example, if a first user establishes a connection with a second user in the social networking system 730, user accounts of the first user and the second user from the user profile store 736 may act as nodes in the social graph. The connection between the first user and the second user stored by the connection store 738 is an edge between the nodes associated with the first user and the second user. Continuing this example, the second user may then send the first user a message within the social networking system 730. The action of sending the message, which may be stored, is another edge between the two nodes in the social graph representing the first user and the second user. Additionally, the message itself may be identified and included in the social graph as another node connected to the nodes representing the first user and the second user.

In another example, a first user may tag a second user in an image that is maintained by the social networking system 730 (or, alternatively, in an image maintained by another system outside of the social networking system 730). The image may itself be represented as a node in the social networking system 730. This tagging action may create edges between the first user and the second user as well as create an edge between each of the users and the image, which is also a node in the social graph. In yet another example, if a user confirms attending an event, the user and the event are nodes obtained from the user profile store 736, where the attendance of the event is an edge between the nodes that may be retrieved from the activity log 742. By generating and maintaining the social graph, the social networking system 730 includes data describing many different types of objects and the interactions and connections among those objects, providing a rich source of socially relevant information.

The web server 732 links the social networking system 730 to one or more user devices 710 and/or one or more external systems 720 via the network 750. The web server 732 serves web pages, as well as other web-related content, such as Java, JavaScript, Flash, XML, and so forth. The web server 732 may include a mail server or other messaging functionality for receiving and routing messages between the social networking system 730 and one or more user devices 710. The messages can be instant messages, queued messages (e.g., email), text and SMS messages, or any other suitable messaging format.

The API request server 734 allows one or more external systems 720 and user devices 710 to call access information from the social networking system 730 by calling one or more API functions. The API request server 734 may also allow external systems 720 to send information to the social networking system 730 by calling APIs. The external system 720, in one embodiment, sends an API request to the social networking system 730 via the network 750, and the API request server 734 receives the API request. The API request server 734 processes the request by calling an API associated with the API request to generate an appropriate response, which the API request server 734 communicates to the external system 720 via the network 750. For example, responsive to an API request, the API request server 734 collects data associated with a user, such as the user's connections that have logged into the external system 720, and communicates the collected data to the external system 720. In another embodiment, the user device 710 communicates with the social networking system 730 via APIs in the same manner as external systems 720.

The action logger 740 is capable of receiving communications from the web server 732 about user actions on and/or off the social networking system 730. The action logger 740 populates the activity log 742 with information about user actions, enabling the social networking system 730 to discover various actions taken by its users within the social networking system 730 and outside of the social networking system 730. Any action that a particular user takes with respect to another node on the social networking system 730 may be associated with each user's account, through information maintained in the activity log 742 or in a similar database or other data repository. Examples of actions taken by a user within the social networking system 730 that are identified and stored may include, for example, adding a connection to another user, sending a message to another user, reading a message from another user, viewing content associated with another user, attending an event posted by another user, posting an image, attempting to post an image, or other actions interacting with another user or another object. When a user takes an action within the social networking system 730, the action is recorded in the activity log 742. In one embodiment, the social networking system 730 maintains the activity log 742 as a database of entries. When an action is taken within the social networking system 730, an entry for the action is added to the activity log 742. The activity log 742 may be referred to as an action log.

Additionally, user actions may be associated with concepts and actions that occur within an entity outside of the social networking system 730, such as an external system 720 that is separate from the social networking system 730. For example, the action logger 740 may receive data describing a user's interaction with an external system 720 from the web server 732. In this example, the external system 720 reports a user's interaction according to structured actions and objects in the social graph.

Other examples of actions where a user interacts with an external system 720 include a user expressing an interest in an external system 720 or another entity, a user posting a comment to the social networking system 730 that discusses an external system 720 or a web page 722a within the external system 720, a user posting to the social networking system 730 a Uniform Resource Locator (URL) or other identifier associated with an external system 720, a user attending an event associated with an external system 720, or any other action by a user that is related to an external system 720. Thus, the activity log 742 may include actions describing interactions between a user of the social networking system 730 and an external system 720 that is separate from the social networking system 730.

The authorization server 744 enforces one or more privacy settings of the users of the social networking system 730. A privacy setting of a user determines how particular information associated with a user can be shared. The privacy setting comprises the specification of particular information associated with a user and the specification of the entity or entities with whom the information can be shared. Examples of entities with which information can be shared may include other users, applications, external systems 720, or any entity that can potentially access the information. The information that can be shared by a user comprises user account information, such as profile photos, phone numbers associated with the user, user's connections, actions taken by the user such as adding a connection, changing user profile information, and the like.

The privacy setting specification may be provided at different levels of granularity. For example, the privacy setting may identify specific information to be shared with other users; the privacy setting identifies a work phone number or a specific set of related information, such as, personal information including profile photo, home phone number, and status. Alternatively, the privacy setting may apply to all the information associated with the user. The specification of the set of entities that can access particular information can also be specified at various levels of granularity. Various sets of entities with which information can be shared may include, for example, all friends of the user, all friends of friends, all applications, or all external systems 720. One embodiment allows the specification of the set of entities to comprise an enumeration of entities. For example, the user may provide a list of external systems 720 that are allowed to access certain information. Another embodiment allows the specification to comprise a set of entities along with exceptions that are not allowed to access the information. For example, a user may allow all external systems 720 to access the user's work information, but specify a list of external systems 720 that are not allowed to access the work information. Certain embodiments call the list of exceptions that are not allowed to access certain information a "block list". External systems 720 belonging to a block list specified by a user are blocked from accessing the information specified in the privacy setting. Various combinations of granularity of specification of information, and granularity of specification of entities, with which information is shared are possible. For example, all personal information may be shared with friends whereas all work information may be shared with friends of friends.

The authorization server 744 contains logic to determine if certain information associated with a user can be accessed by a user's friends, external systems 720, and/or other applications and entities. The external system 720 may need authorization from the authorization server 744 to access the user's more private and sensitive information, such as the user's work phone number. Based on the user's privacy settings, the authorization server 744 determines if another user, the external system 720, an application, or another entity is allowed to access information associated with the user, including information about actions taken by the user.

In some embodiments, the social networking system 730 can include a content provider module 746. The content provider module 746 can, for example, be implemented as the content provider module 102 of **FIGURE 1****.** As discussed previously, it should be appreciated that there can be many variations or other possibilities.

### HARDWARE IMPLEMENTATION

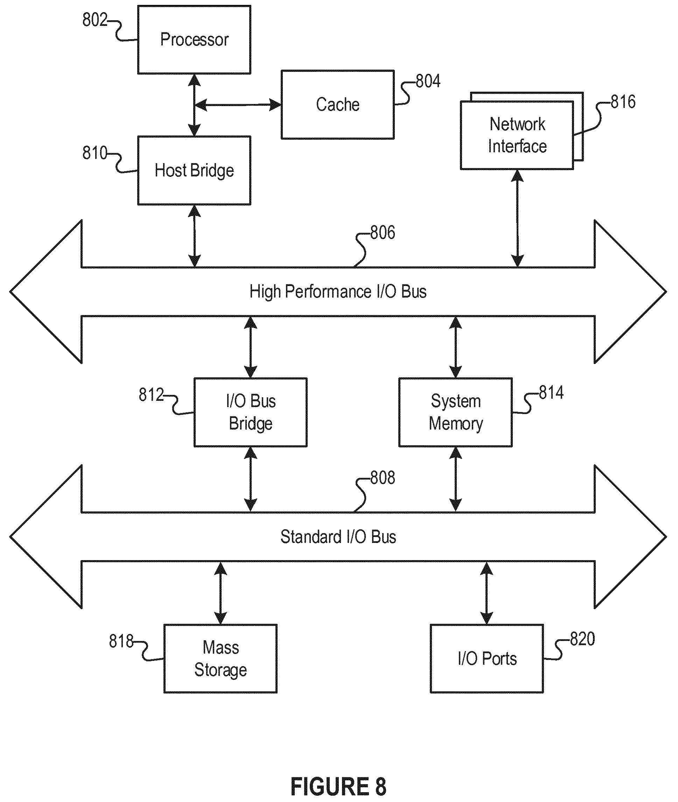

The foregoing processes and features can be implemented by a wide variety of machine and computer system architectures and in a wide variety of network and computing environments. **FIGURE 8** illustrates an example of a computer system 800 that may be used to implement one or more of the embodiments described herein in accordance with an embodiment of the invention. The computer system 800 includes sets of instructions for causing the computer system 800 to perform the processes and features discussed herein. The computer system 800 may be connected (e.g., networked) to other machines. In a networked deployment, the computer system 800 may operate in the capacity of a server machine or a client machine in a client-server network environment, or as a peer machine in a peer-to-peer (or distributed) network environment. In an embodiment of the invention, the computer system 800 may be the social networking system 730, the user device 710, and the external system 820, or a component thereof. In an embodiment of the invention, the computer system 800 may be one server among many that constitutes all or part of the social networking system 730.

The computer system 800 includes a processor 802, a cache 804, and one or more executable modules and drivers, stored on a computer-readable medium, directed to the processes and features described herein. Additionally, the computer system 800 includes a high performance input/output (I/O) bus 806 and a standard I/O bus 808. A host bridge 810 couples processor 802 to high performance I/O bus 806, whereas I/O bus bridge 812 couples the two buses 806 and 808 to each other. A system memory 814 and one or more network interfaces 816 couple to high performance I/O bus 806. The computer system 800 may further include video memory and a display device coupled to the video memory (not shown). Mass storage 818 and I/O ports 820 couple to the standard I/O bus 808. The computer system 800 may optionally include a keyboard and pointing device, a display device, or other input/output devices (not shown) coupled to the standard I/O bus 808. Collectively, these elements are intended to represent a broad category of computer hardware systems, including but not limited to computer systems based on the x86-compatible processors manufactured by Intel Corporation of Santa Clara, California, and the x86-compatible processors manufactured by Advanced Micro Devices (AMD), Inc., of Sunnyvale, California, as well as any other suitable processor.

An operating system manages and controls the operation of the computer system 800, including the input and output of data to and from software applications (not shown). The operating system provides an interface between the software applications being executed on the system and the hardware components of the system. Any suitable operating system may be used, such as the LINUX Operating System, the Apple Macintosh Operating System, available from Apple Computer Inc. of Cupertino, California, UNIX operating systems, Microsoft® Windows® operating systems, BSD operating systems, and the like. Other implementations are possible.

The elements of the computer system 800 are described in greater detail below. In particular, the network interface 816 provides communication between the computer system 800 and any of a wide range of networks, such as an Ethernet (e.g., IEEE 802.3) network, a backplane, etc. The mass storage 818 provides permanent storage for the data and programming instructions to perform the above-described processes and features implemented by the respective computing systems identified above, whereas the system memory 814 (e.g., DRAM) provides temporary storage for the data and programming instructions when executed by the processor 802. The I/O ports 820 may be one or more serial and/or parallel communication ports that provide communication between additional peripheral devices, which may be coupled to the computer system 800.

The computer system 800 may include a variety of system architectures, and various components of the computer system 800 may be rearranged. For example, the cache 804 may be on-chip with processor 802. Alternatively, the cache 804 and the processor 802 may be packed together as a "processor module", with processor 802 being referred to as the "processor core". Furthermore, certain embodiments of the invention may neither require nor include all of the above components. For example, peripheral devices coupled to the standard I/O bus 808 may couple to the high performance I/O bus 806. In addition, in some embodiments, only a single bus may exist, with the components of the computer system 800 being coupled to the single bus. Moreover, the computer system 800 may include additional components, such as additional processors, storage devices, or memories.

In general, the processes and features described herein may be implemented as part of an operating system or a specific application, component, program, object, module, or series of instructions referred to as "programs". For example, one or more programs may be used to execute specific processes described herein. The programs typically comprise one or more instructions in various memory and storage devices in the computer system 800 that, when read and executed by one or more processors, cause the computer system 800 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 800, individually or collectively in a distributed computing environment. The foregoing modules may be realized by hardware, executable modules stored on a computer-readable medium (or machine-readable medium), or a combination of both. For example, the modules may comprise a plurality or series of instructions to be executed by a processor in a hardware system, such as the processor 802. Initially, the series of instructions may be stored on a storage device, such as the mass storage 818. However, the series of instructions can be stored on any suitable computer readable storage medium. Furthermore, the series of instructions need not be stored locally, and could be received from a remote storage device, such as a server on a network, via the network interface 816. The instructions are copied from the storage device, such as the mass storage 818, into the system memory 814 and then accessed and executed by the processor 802. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 800 to perform any one or more of the processes and features described herein.

For purposes of explanation, numerous specific details are set forth in order to provide a thorough understanding of the description. It will be apparent, however, to one skilled in the art that embodiments of the disclosure can be practiced without these specific details. In some instances, modules, structures, processes, features, and devices are shown in block diagram form in order to avoid obscuring the description. In other instances, functional block diagrams and flow diagrams are shown to represent data and logic flows. The components of block diagrams and flow diagrams (e.g., modules, blocks, structures, devices, features, etc.) may be variously combined, separated, removed, reordered, and replaced in a manner other than as expressly described and depicted herein.

Reference in this specification to "one embodiment", "an embodiment", "other embodiments", "one series of embodiments", "some embodiments", "various embodiments", or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments. Moreover, whether or not there is express reference to an "embodiment" or the like, various features are described, which may be variously combined and included in some embodiments, but also variously omitted in other embodiments. Similarly, various features are described that may be preferences or requirements for some embodiments, but not other embodiments.

The language used herein has been principally selected for readability and instructional purposes, and it may not have been selected to delineate or circumscribe the inventive subject matter. It is therefore intended that the scope of the invention be limited not by this detailed description, but rather by any claims that issue on an application based hereon. Accordingly, the disclosure of the embodiments of the invention is intended to be illustrative, but not limiting, of the scope of the invention, which is set forth in the following claims.

## Claims

1. A computer-implemented method comprising:
providing, by a computing device, a content feed having at least a first content item and a second content item through a display interface, wherein the first content item is associated with a threshold playback time;
determining, by the computing device, the first content item is being played through the display interface;
receiving, by the computing device, at least one touch screen gesture through the display interface; and
preventing, by the computing device, a response to the touch screen gesture until the first content item is played for the threshold playback time.

2. The computer-implemented method of claim 1, the method further comprising:
upon receiving the touch screen gesture, providing, by the computing device, at least one message through the display interface, the message indicating that browsing of the content feed is disabled.

3. The computer-implemented method of claim 1 or 2, the method further comprising:
upon receiving the touch screen gesture, providing, by the computing device, at least one message through the display interface, the message indicating an amount of time remaining until browsing of the content feed is enabled.

4. The computer-implemented method of any of claims 1 to 3, the method further comprising:
determining, by the computing device, that the first content item has been played through the display interface for the threshold playback time;
determining, by the computing device, a second touch screen gesture through the display interface for browsing the content feed to the second content item; and
playing, by the computing device, the second content item through the display interface.

5. The computer-implemented method of claim 4, wherein the second content item is not associated with a corresponding threshold playback time, the method further comprising:
determining, by the computing device, a third touch screen gesture through the display interface for browsing the content feed to a third content item in the content feed; and
updating, by the computing device, the display interface to advance the content feed to the third content item, wherein the advancing of the content feed is not prevented for any period of time;
preferably wherein playback of the second content item is started automatically once the second content item is within a viewport region of the display interface.

6. The computer-implemented method of any of claims 1 to 5, wherein the touch screen gesture is at least one of a drag gesture, slide gesture, scroll gesture, swipe gesture, tap gesture, pinch gesture, spread gesture, rotate gesture, or a flick gesture.

7. The computer-implemented method of any of claims 1 to 6, wherein, while the first content item is playing, at least a portion of the second content item is visible through the display interface;
preferably wherein, a region of the content feed corresponding to the portion of the second content item is displayed using a reduced brightness level.

8. The computer-implemented method of any of claims 1 to 7, the method further comprising:
determining, by a computing system, a revenue amount that satisfies a cost of acquiring one or more content items in the content feed; and
determining, by the computing system, the threshold playback time based at least in part on the revenue amount.

9. A system comprising:
at least one processor; and
a memory storing instructions that, when executed by the at least one processor, cause the system to perform:
providing a content feed having at least a first content item and a second content item through a display interface, wherein the first content item is associated with a threshold playback time;
determining the first content item is being played through the display interface;
receiving at least one touch screen gesture through the display interface; and preventing a response to the touch screen gesture until the first content item is played for the threshold playback time.

10. The system of claim 9, wherein the instructions further cause the system to perform:
upon receiving the touch screen gesture, providing at least one message through the display interface, the message indicating that browsing of the content feed is disabled.

11. The system of claim 9 or 10, wherein the instructions further cause the system to perform:
upon receiving the touch screen gesture, providing at least one message through the display interface, the message indicating an amount of time remaining until browsing of the content feed is enabled.

12. The system of any of claims 9 to 11, wherein the instructions further cause the system to perform:
determining that the first content item has been played through the display interface for the threshold playback time;
determining a second touch screen gesture through the display interface for browsing the content feed to the second content item; and
playing the second content item through the display interface;
preferably wherein the second content item is not associated with a corresponding threshold playback time, and wherein the instructions further cause the system to perform:
determining a third touch screen gesture through the display interface for browsing the content feed to a third content item in the content feed; and
updating the display interface to advance the content feed to the third content item, wherein the advancing of the content feed is not prevented for any period of time.

13. A non-transitory computer-readable storage medium including instructions that, when executed by at least one processor of a computing system, cause the computing system to perform a method comprising:
providing a content feed having at least a first content item and a second content item through a display interface, wherein the first content item is associated with a threshold playback time;
determining the first content item is being played through the display interface;
receiving at least one touch screen gesture through the display interface; and
preventing a response to the touch screen gesture until the first content item is played for the threshold playback time.

14. The non-transitory computer-readable storage medium of claim 13, wherein the instructions further cause the computing system to perform:
upon receiving the touch screen gesture, providing at least one message through the display interface, the message indicating that browsing of the content feed is disabled; and/or
upon receiving the touch screen gesture, providing at least one message through the display interface, the message indicating an amount of time remaining until browsing of the content feed is enabled.

15. The non-transitory computer-readable storage medium of claim 13 or 14, wherein the instructions further cause the computing system to perform:
determining that the first content item has been played through the display interface for the threshold playback time;
determining a second touch screen gesture through the display interface for browsing the content feed to the second content item; and
playing the second content item through the display interface; and/or
wherein the second content item is not associated with a corresponding threshold playback time, and wherein the instructions further cause the computing system to perform:
determining a third touch screen gesture through the display interface for browsing the content feed to a third content item in the content feed; and
updating the display interface to advance the content feed to the third content item, wherein the advancing of the content feed is not prevented for any period of time.
